# FASCICULE DE BREVET EUROPEEN

(11) **EP 2 539 161 B1**
(45) Date de publication et mention de la délivrance du brevet: **20.11.2013**
(21) Numéro de dépôt: 11704621.9
(22) Date de dépôt: 22.02.2011
(51) Int. Cl.: B60C 11/13

(54) **DISPOSITIF DE PROTECTION D'UNE RAINURE D'UNE BANDE DE ROULEMENT**
VORRICHTUNG ZUM SCHUTZ EINER RINNE IN EINER SPUR
TREAD SIPE PROTECTION

(30) Priorité: 22.02.2010 FR 1051257
(43) Date de publication de la demande: 02.01.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: AUDIGIER, Richard, F-63350 St-Laure (FR); ORAISON, Stéphane, F-03200 Cusset (FR); MARLIER, Fabien, F-63000 Clermont-Ferrand (FR)
(74) Mandataire: Diernaz, Christian
(86) Numéro de dépôt international: PCT/EP2011/052628
(87) Numéro de publication internationale: WO 2011/101495

(56) Documents cités:
- WO-A1-99/48707
- FR-A1- 2 548 097
- GB-A- 903 389
- US-A- 3 115 919

## Description

### Domaine de l'invention

L'invention concerne les pneus pour véhicule poids lourd et plus particulièrement les bandes de roulement pour ces pneus.

### État de la technique

Un pneu pour véhicule poids lourd comprend une bande de roulement dont la surface radialement à l'extérieur forme une surface de roulement destinée à venir en contact avec la chaussée pendant le roulage. Cette bande de roulement est pourvue, de manière connue, de rainures formant dans le contact avec la chaussée des volumes aptes à drainer l'eau présente sur une chaussée route par temps de pluie.

Les pneus pour poids lourd ont la particularité de présenter une épaisseur de bande de roulement relativement importante comparativement à celle de pneu pour véhicule de tourisme ce qui permet d'obtenir des distances d'utilisation du pneu qui sont très importantes (plusieurs centaines de milliers de kilomètres).

Il résulte de la présence de cette épaisseur et de la nécessité d'avoir une capacité de drainage satisfaisante même après une usure partielle de la bande de roulement que la personne du métier est contrainte de réaliser des rainures dont la profondeur sur la bande neuve (c'est-à-dire avant tout roulage) est relativement importante et donc proche de l'épaisseur de la bande de roulement. Cette profondeur importante conduit à une diminution sensible de la rigidité au moins à l'état neuf de la bande et par voie de conséquence génère une réduction de certaines performances.
Document US3115919 montre un pneu selon le préambule de la revendication 1.

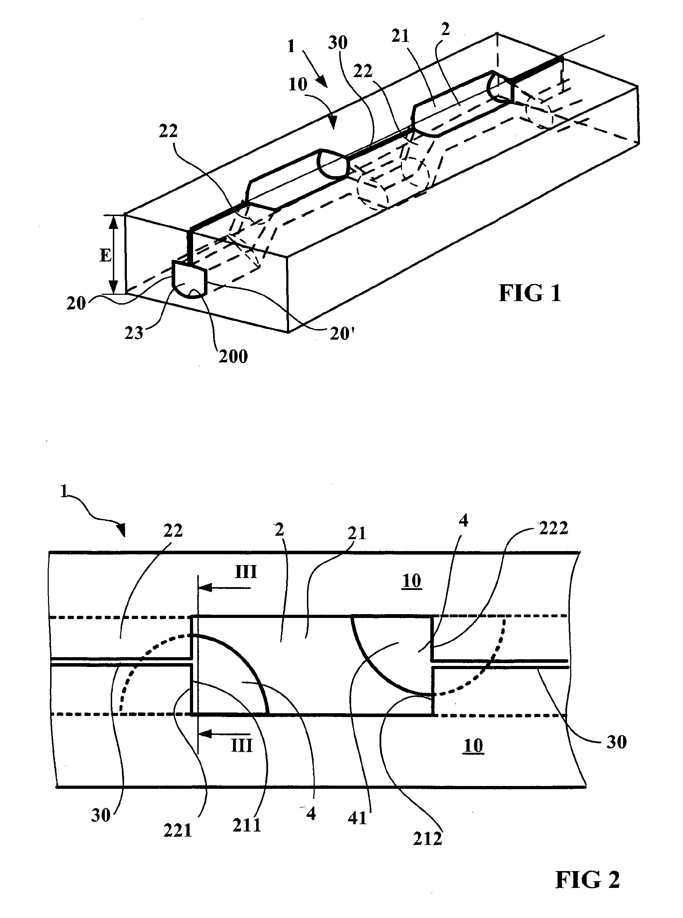

C'est la raison pour laquelle les déposants ont proposé un nouveau type de rainure qui a fait l'objet d'un dépôt d'une demande de brevet non encore publiée à la date de réalisation de la présente invention. Ce type de rainure est montrée avec le support de la figure 1 du présent document.

Selon cette proposition, une bande de roulement 1 pour pneu de véhicule poids lourd est pourvue avec au moins une rainure 2 délimitée par des parois latérales en vis-à-vis, cette rainure 2 débouchant sur la surface de roulement 10 de façon discontinue en une pluralité de portions ouvertes vers l'extérieur de la bande, les parois latérales étant reliées par une partie formant le fond de la rainure. Ces portions ouvertes 21 comprennent deux extrémités se prolongeant sous la surface de roulement par des premiers canaux 22, 23, les canaux 22 ayant des entrées reliées aux extrémités des portions ouvertes 21. Chacune de ces rainures 2 offre une capacité de drainage à l'état neuf par la continuité avec les canaux 22, 23 ; cette capacité de drainage est remplie à l'état usé dès lors qu'en combinaison avec ces premiers canaux 22, 23 des deuxièmes canaux continus (non montrés ici) sont formés intégralement sous la surface de roulement, ces deuxièmes canaux étant ou non reliés aux premiers canaux 22, 23. Ainsi, il est possible de limiter la diminution des rigidités de la bande de roulement, notamment la rigidité de cisaillement sous efforts tangentiels exercés en roulage dans le contact avec une chaussée, tout en conservant une capacité appropriée des rainures à évacuer l'eau présente sur la chaussée.

Dans le cas de rainures totalement ouvertes sur la surface de roulement, il était connu que des objets (comme des cailloux) pouvaient rentrer dans ces rainures et agresser le fond desdites rainures et des solutions avaient été proposées consistant à former sur le fond desdites rainures un redent continu ou une pluralité de redents discontinus pour empêcher lesdits objets de pénétrer dans le fond des rainures et venir blesser la structure de renforcement voire l'annature de carcasse du pneu. Par redent continu, on entend une partie en relief formée sur le fond de la rainure et dont la hauteur est au plus 20% de la profondeur de ladite rainure.

Dans le cas des rainures partiellement ouvertes sur la surface de roulement et comportant des parties formant canaux sous la surface de roulement - ces parties étant destinées à devenir elles mêmes ouvertes sur une surface de roulement obtenue après usure partielle - , le problème se pose, au moins lorsque la bande de roulement est neuve, d'assurer une bonne circulation de l'eau dans la totalité de la rainure et en particulier dans les parties de ces rainures sous jacentes à la surface de roulement, c'est-à-dire celles formant des canaux à l'intérieur de la bande.

### Résumé de l'invention

L'objectif de l'invention est d'éviter que la circulation de liquide dans les rainures soit empêchée par l'introduction de matière étrangère ou de corps étrangers à l'intérieur des parties formant canaux radialement sous la surface de roulement.

L'objet de l'invention est un pneu pour véhicule poids lourd comportant une bande de roulement ayant une surface de roulement destinée à venir en contact avec une chaussée, cette bande étant pourvue à l'état neuf avec au moins une rainure délimitée par des parois latérales se faisant face, ces parois latérales étant reliées entre elles par un fond de rainure, cette rainure comprenant, à l'état neuf, une pluralité de portions ouvertes vers l'extérieur de la bande et de portions formant des canaux sous jacent à la surface de roulement, chaque portion ouverte ayant deux extrémités et se prolongeant de part et d'autre de ses extrémités sous la surface de roulement par ces canaux ayant des entrées reliées respectivement aux extrémités des portions ouvertes, ces entrées de chaque canal ayant une surface moyenne S, cette bande de roulement étant caractérisée en ce qu'au moins une entrée de chaque canal est pourvue avec un dispositif de fermeture partielle pour fermer en partie la section des entrées des canaux lors du roulage du pneu et réserver un passage non fermé, ce dispositif de fermeture comprenant au moins une protubérance formée sur au moins une paroi délimitant la rainure, ce dispositif de fermeture étant prévu pour fermer au moins 40% de la surface de section S des entrées des canaux et au plus 70% de cette surface S.

Grâce à ce dispositif de fermeture partielle des extrémités de chaque partie de rainure formant canal sous la surface de roulement, il est possible de maintenir un drainage de liquide approprié tout en empêchant la pénétration de corps étrangers de dimensions telles que ces corps ne puissent être éjectés des canaux.

Il doit être compris que la formulation de l'invention s'applique également au cas où les canaux d'une même rainure n'ont pas tous la même surface de section S, c'est-à-dire que les entrées de canaux peuvent varier d'un canal à un autre.

Préférentiellement pour laisser un passage à l'eau, le dispositif de fermeture est formé de manière à créer un passage formant ouverture entre le dispositif de fermeture et le fond de la rainure, ce passage ayant une section au moins égale à 30% de la surface de section S des entrées des canaux.

Préférentiellement, chaque dispositif de fermeture d'au moins une rainure comprend deux protubérances séparées l'une de l'autre dans la direction de la largeur de la rainure par une distance minimale D, chaque protubérance étant portée par une paroi de la rainure et séparée de la paroi opposée de cette même rainure par une distance minimale A. Ce dispositif de fermeture est en outre tel que la distance minimale D entre deux protubérances est inférieure à la distance minimale A. Préférentiellement la distance minimale D entre les protubérances n'est pas nulle à l'état neuf.

Dans une forme de réalisation d'un dispositif de fermeture, celui-ci est constitué de deux demi protubérances de forme semi hémisphérique et faisant chacune saillie sur une paroi délimitant une rainure.

Dans tous les cas, le dispositif selon l'invention exploite un mécanisme observé au moment du passage dans le contact avec la route : le changement de courbure de la surface externe de la bande de roulement ainsi que les variations de tension à l'intérieur des structures renforçantes du pneu conduisent à une contraction transversale (c'est-à-dire dans une direction parallèle à l'axe de rotation du pneu) de la bande de roulement dans la partie centrale de l'empreinte de contact. Par partie centrale de l'empreinte de contact, on entend ici sensiblement la partie à l'aplomb de l'axe de rotation. Il se produit en conséquence une réduction de la largeur des rainures orientées circonférentiellement en allant de l'entrée de l'empreinte vers le milieu de cette empreinte ; puis il y a à nouveau une ouverture en allant vers la sortie. Grâce à ce mécanisme, inhérent à l'écrasement du pneu et au roulage, le dispositif selon l'invention est particulièrement efficace puisque dans la partie la plus sensible au ramassage de corps étrangers ce dispositif ferme davantage encore les sections d'entrée et de sortie des canaux.

Si, malgré la présence de ces dispositifs de fermeture, des corps étrangers rentrent dans une partie formant canal sous la surface de roulement, ces corps étrangers ne sauraient être de dimensions telles qu'ils obstruent en totalité la section dudit canal. Il en résulte un maintien d'une capacité de drainage dans chacun des canaux.

Dans une variante de l'invention, le dispositif de fermeture d'au moins une entrée de chaque canal d'une même rainure, comportant des ouvertures discontinues sur une surface de roulement à l'état neuf, est formé avec au moins une protubérance, chaque protubérance étant en totalité moulée sur une paroi du canal, cette protubérance étant formée pour être reliée au fond dudit canal, une ouverture étant ménagée pour être située latéralement à chaque protubérance et au dessus de chaque protubérance.

Avantageusement, la partie latérale de l'ouverture ménagée par le dispositif de fermeture de chaque canal a une largeur L1 qui est égale voire sensiblement égale à la largeur L2 de la partie de la même ouverture située au dessus de chaque protubérance du dispositif de fermeture.

Selon une autre variante préférentielle, la largeur L1 est proche de ou égale à zéro : dans ce cas, cela revient à découpler par une sorte d'incision la protubérance de la partie de la bande de roulement située au dessus (c'est-à-dire de la partie de la bande de roulement comprise entre la surface de roulement à l'état neuf et le canal).

Dans une autre variante intéressante appliquée à un pneu comportant un sens préférentiel de roulage matérialisé sur le pneu par un indicateur visible, chaque dispositif de fermeture est formé sur une seule entrée de chaque canal, cette entrée correspondant à la partie de chaque canal rentrant la première dans le contact lorsque le pneu roule sur une chaussée. Ainsi, on empêche que des corps étrangers de grande largeur ne rentrent dans un canal selon un sens préférentiel de rentrée pour venir boucher ledit canal et réduire la possibilité de drainage. Par grande largeur il faut entendre un corps dont les dimensions de section sont voisines ou supérieures aux dimensions de la section des entrées des canaux. Par ailleurs, le fait de ne mettre qu'un dispositif de fermeture dans chaque canal, permet l'évacuation par l'autre entrée d'éventuels corps étrangers ayant passé l'ouverture située du côté où est situé le dispositif de fermeture partielle.

### Brève description des dessins

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue partielle d'une bande de roulement comportant une rainure comprenant des parties s'ouvrant sur la surface de roulement et des parties sous jacentes ;

La figure 2 montre une vue partielle en élévation d'une rainure telle que représentée à la figure 1 et comprenant un dispositif selon une première variante de l'invention ;

La figure 3 montre une coupe selon la ligne III-III prise sur la figure 2 ;

La figure 4-A montre en coupe une autre variante de dispositif selon l'invention comprenant deux protubérances se faisant face ;

La figure 4-B montre en coupe la variante de la figure 4-A lors du passage dans le contact avec une chaussée ;

La figure 5 montre, vue en élévation, une autre variante de dispositif selon l'invention comprenant deux protubérances décalées l'une par rapport à l'autre dans la direction principale de la rainure ;

La figure 6 montre, vue en élévation, une autre variante de dispositif selon l'invention comprenant deux protubérances décalées l'une par rapport à l'autre à la fois dans la direction principale de la rainure et dans la direction de la profondeur de la rainure ;

La figure 7 montre une coupe selon la ligne VII-VII prise sur la figure 6 ;

La figure 8 montre une vue d'une partie d'une surface de roulement d'une variante de bande de roulement selon l'invention ;

La figure 9 montre une vue en coupe selon un plan de coupe dont la trace est repérée par la ligne IX-IX sur la figure 8 ;

La figure 10 montre une vue en coupe selon un plan de coupe dont la trace est repérée par la ligne X-X sur la figure 9.

### Description détaillée des dessins

Pour simplifier la lecture des figures, des mêmes références sont employées pour indiquer des éléments structurellement ou fonctionnellement identiques.

La figure 1 montre une vue partielle d'une bande de roulement 1 comprenant une surface de roulement 10 destinée à venir en contact avec une chaussée lors du roulage d'un pneu pourvu avec cette bande. Cette bande de roulement comprend au moins une rainure 2 destinée notamment à drainer l'eau présente sur la chaussée par temps de pluie. Cette rainure 2 est formée de manière à présenter une pluralité de parties ouvertes 21 sur la surface de roulement 10 lorsque la bande est neuve, c'est-à-dire lorsqu'elle n'a pas encore été usée par roulage (correspondant à son état en sortie de moulage). Ces parties ouvertes 21 sur la surface de roulement sont reliées entre elles par des canaux 22, 23 moulés sous ladite surface pour assurer la continuité de la rainure 2. Chaque rainure 2 est délimitée par deux parois 20, 20' en vis-à-vis, ces deux parois 20, 20' étant reliées entre elles par un fond de rainure 200.

Pour faciliter le démoulage, chaque partie de la rainure formant un canal 22, 23 sous la surface de roulement est prolongée vers la surface de roulement 10 par une incision 30. Par incision, on entend ici l'espace délimité par des parois en vis-à-vis séparées par une distance inférieure à 2 mm et susceptibles de venir en contact l'une contre l'autre dans les conditions usuelles d'usage.

À l'état neuf de la bande et jusqu'à disparition des parties ouvertes 21 initialement sur la surface de roulement, ce type de rainure 2 comportant des parties débouchant sur la surface de roulement réunies entre elles par des parties formant des canaux 22, 23 s'étendant sous la surface de roulement permet de réaliser un drainage de l'eau puisque les diverses parties de cette rainure sont raccordées entre elles. Un intérêt de ce type de rainure est de limiter la profondeur maximale de la rainure à l'état neuf car cette profondeur maximale correspond à la profondeur des parties débouchant sur la surface de roulement et cette profondeur est inférieure à la profondeur des points de la rainure 2 les plus à l'intérieur de la bande de roulement. Ces points correspondent aux points du fond des canaux.

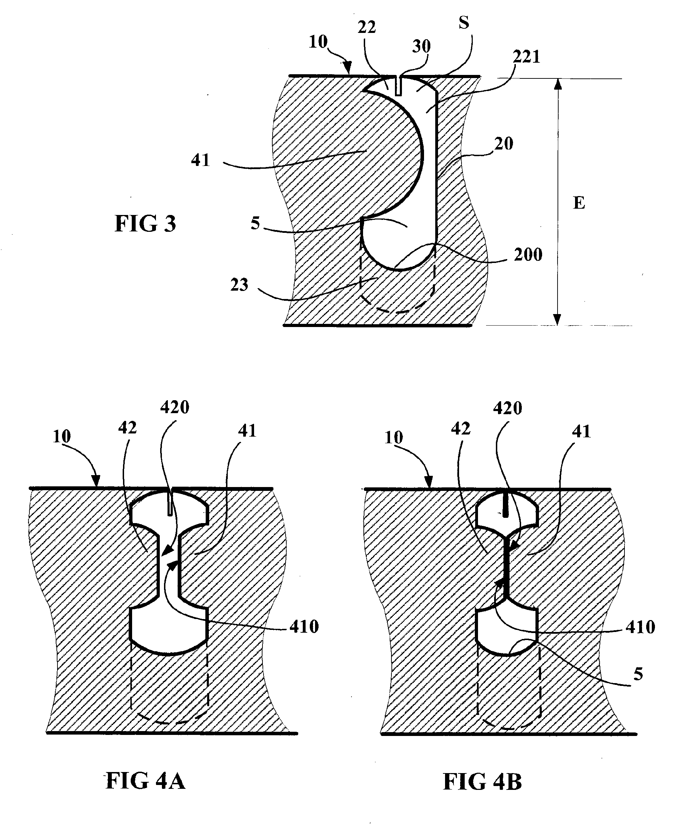

La figure 2 montre une partie de la bande de roulement 1 comportant une rainure 2 telle que montrée à la figure 1, cette rainure comportant une pluralité de dispositifs de fermeture selon l'invention. Sur cette figure 2, on voit une partie ouverte formant une cavité 21 débouchant sur la surface de roulement 10, cette cavité 21 comprenant deux extrémités 211, 212 distantes l'une de l'autre dans la direction principale de la rainure. À chacune de ces extrémités 211, 212, la cavité 21 se prolonge par un canal 22 plongeant dans l'épaisseur de la bande de roulement. Chaque canal comprend une entrée 221, 222 reliée à une extrémité 211, 212 de la cavité 21 débouchant sur la surface de roulement, cette entrée ayant une section transversale d'aire S. Au droit de la liaison entre chaque canal 22 et chaque cavité 21 sur la surface de roulement, il est formé un dispositif de fermeture 4 pour fermer en partie la section des entrées 221, 222 des canaux 22 lors du roulage du pneu et réserver un passage 5 non fermé quelles que soient les conditions de roulage (ce passage est visible sur la figure 3 qui montre une coupe transversale selon une ligne III-III prise sur la figure 2). Dans le cas présent, le dispositif de fermeture 4 comprend une protubérance 41 de forme semi hémisphérique, cette protubérance 41 étant formée par moulage sur une paroi 20, 20' délimitant la rainure 2. Dans le cas présenté, la protubérance 4 est sensiblement pour moitié formée dans la cavité 21 débouchant sur la surface de roulement et pour l'autre moitié dans le canal 22 prolongeant ladite cavité. Par ailleurs, les protubérances 4 sont formées pour être en alternance sur une paroi de la rainure à une extrémité et sur la paroi en vis-à-vis à l'autre extrémité. On distingue débouchant sur la surface de roulement 10, les incisions 30 formées entre les canaux 22, 23 et ladite surface de roulement.

Comme on peut le voir à la figure 3 montrant une coupe dans l'épaisseur de la bande de roulement au droit d'une ligne III-III sur la figure 2, il est réservé un passage 5 entre le fond 200 de la rainure et la protubérance. Ce passage 5 ouvert quel que soit le niveau d'usure de la bande de roulement est au moins égal à 30% de la surface de section S des entrées des canaux. Dans le cas présent, la surface de section S de l'entrée 221 du canal 22 est égale à la section des extrémités des cavités 21 débouchant sur la surface de roulement. En pointillés on voit la section du canal 23 qui après usure partielle débouche sur la nouvelle surface de roulement.

En conséquence et quand bien même cette protubérance rentre en contact avec la paroi opposée, le drainage de l'eau reste possible grâce au passage 5.

Le dispositif de fermeture montré avec les figures 2 et 3 occupe en section transversale une surface égale à au moins 40% de la surface de section S des entrées des canaux et au plus 70% de cette surface S.

La figure 4-A montre en coupe une autre variante de dispositif selon l'invention comprenant deux protubérances 41, 42 disposées à chaque extrémité des parties de rainures débouchant à l'état neuf sur la surface de roulement. Dans la variante présentée, les protubérances 41, 42 ont des formes semi hémisphériques tronquées. Par tronquées, on entend qu'elles comportent chacune une partie plane 410, 420 et que ces parties planes se font face dans la rainure. Lors du roulage, les parties planes 410, 420 rapprochent et viennent en contact l'une sur l'autre pour fermer partiellement la section d'entrée des canaux prolongeant les parties de la rainure débouchant sur la surface de roulement.

La figure 4-B montre la même variante lors du passage dans le contact. Les parois 410, 420 en vis-à-vis des protubérances sont en contact. Bien entendu, entre les protubérances 41, 42 et le fond 200 de la rainure un passage 5 est maintenu afin de permettre un drainage de l'eau.

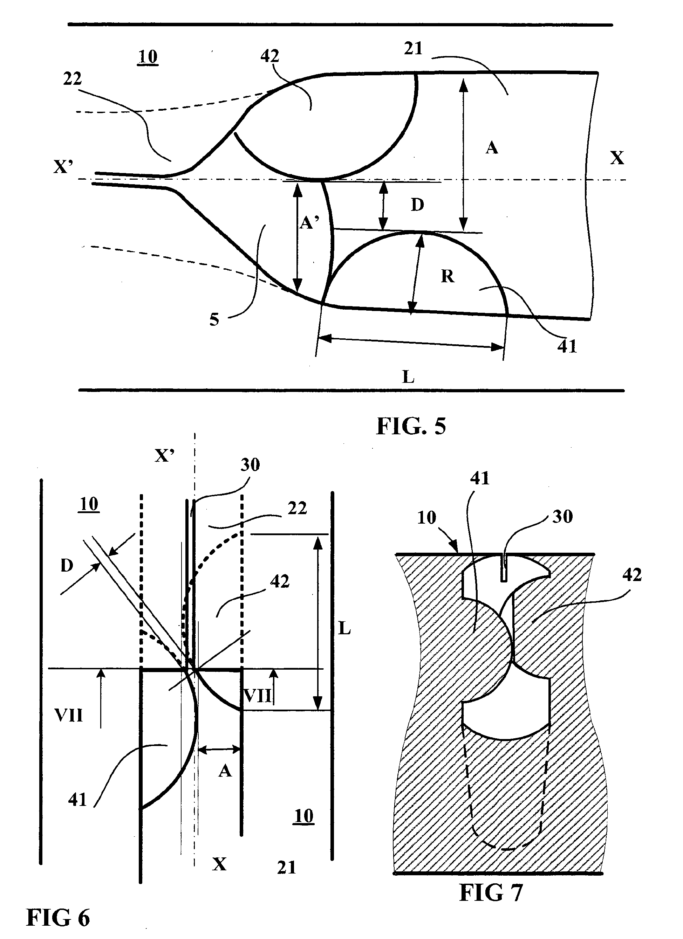

La figure 5 montre, vue en élévation, une autre variante de dispositif selon l'invention comprenant deux protubérances 41, 42 décalées l'une par rapport à l'autre dans la direction principale XX' de la rainure, laquelle correspond dans le cas présent à la direction circonférentielle.

Le pneu pourvu avec cette bande est destiné à équiper un véhicule poids lourd et est de dimension 315/70 R 22.5. Cette bande comprend une rainure comportant une pluralité de parties ouvertes 21 sur la surface de roulement formant des cavités 21, ces cavités étant prolongées à ses extrémités par un canal 22 formé sous ladite surface.

Les cavités débouchant à l'état neuf sur la surface de roulement ont une longueur moyenne égale à 150 mm.

Les parties formant canal 22 entre deux cavités 21 débouchant sur la surface de roulement ont une longueur totale de 140 mm. Ces parties formant canal comprennent des portions inclinées avec un angle de 23 degrés et des parties sensiblement parallèles à la surface de roulement (comme cela est montré à la figure 1).

Les cavités 21 ont une largeur moyenne de 12 mm et les parois font un angle de 15 degrés avec une perpendiculaire à la surface de roulement. La profondeur de ces cavités est égale à 7 mm.

Les canaux 22 prolongeant ces cavités débouchant sur la surface de roulement ont une largeur moyenne égale à 9 mm et une hauteur égale à 7 mm.

Le dispositif de fermeture comprend une première protubérance 41 et une deuxième protubérance 42, chacune de ces protubérances ayant une épaisseur mesurée dans la direction de la profondeur de la rainure égale à 5.2 mm, une longueur L selon la direction principale XX' de la rainure égale à 8.5 mm et une largeur R dans la direction de la largeur de la rainure égale à 5 mm. Dans la partie 21 de la rainure s'ouvrant sur la surface de roulement 10, la distance A entre la première protubérance 41 présente dans cette partie de rainure et la paroi en vis-à-vis de la rainure est égale à 7 mm. Pour la deuxième protubérance, la distance A' séparant cette deuxième protubérance 42 de la paroi en vis-à-vis du canal est égale à 4 mm.

La distance minimale **D** entre les deux protubérances est égale à 2 mm.

La figure 6 montre une autre variante du dispositif constituée de deux protubérances 41, 42 décalées l'une par rapport à l'autre dans la direction principale XX' de la rainure. Dans cette variante, les protubérances 41, 42 ont une géométrie identique à celle des protubérances de la variante montrée avec le support des figures 4-A et 4-B. Cette variante présente l'avantage de protéger une zone plus importante de la zone de transition. En effet, grâce au décalage entre les protubérances, la longueur protégée de la rainure est plus grande et, par conséquent, la zone de transition formée entre les parties 21 de rainure débouchant sur la surface de roulement et les parties 22 formant des canaux s'enfonçant dans l'épaisseur de la bande est mieux protégée vis-à-vis de l'introduction de corps étrangers non fluides.

La figure 7 montre une coupe réalisée selon la ligne VII-VII prise sur la figure 6. Dans le cas présent, les deux demi protubérances 41, 42 sont formées à des profondeurs différentes tout en étant décalées dans la direction de la rainure. De façon avantageuse, la distance minimale **D** séparant les deux demi protubérances est plus petite que la distance minimale **A** séparant chaque demi protubérance de la paroi opposée de la rainure. De cette manière, on favorise l'écoulement d'un fluide tout limitant la circulation dans la rainure de corps solides étrangers.

Préférentiellement, chaque dispositif de fermeture doit se situer au plus près de l'entrée d'un canal pour être efficace. Ainsi chaque protubérance d'un dispositif de fermeture doit se situer dans la partie de la rainure sur au moins 50% et au plus 80% de sa longueur dans la partie de rainure s'ouvrant sur la surface de roulement. Ceci conduit à ce que chaque protubérance s'étend sur au moins 20% de sa longueur dans une partie de rainure formant un canal et prolongeant une partie de rainure s'ouvrant sur la surface de roulement.

Selon une autre variante préférentielle, le dispositif de fermeture de chaque canal est formé par une protubérance unique moulée sur une paroi du canal et liée au fond dudit canal de manière à ménager un espace non fermé à la fois latéralement à ladite protubérance et au dessus de ladite protubérance. Dans cette variante le dispositif de fermeture est totalement situé dans un canal.

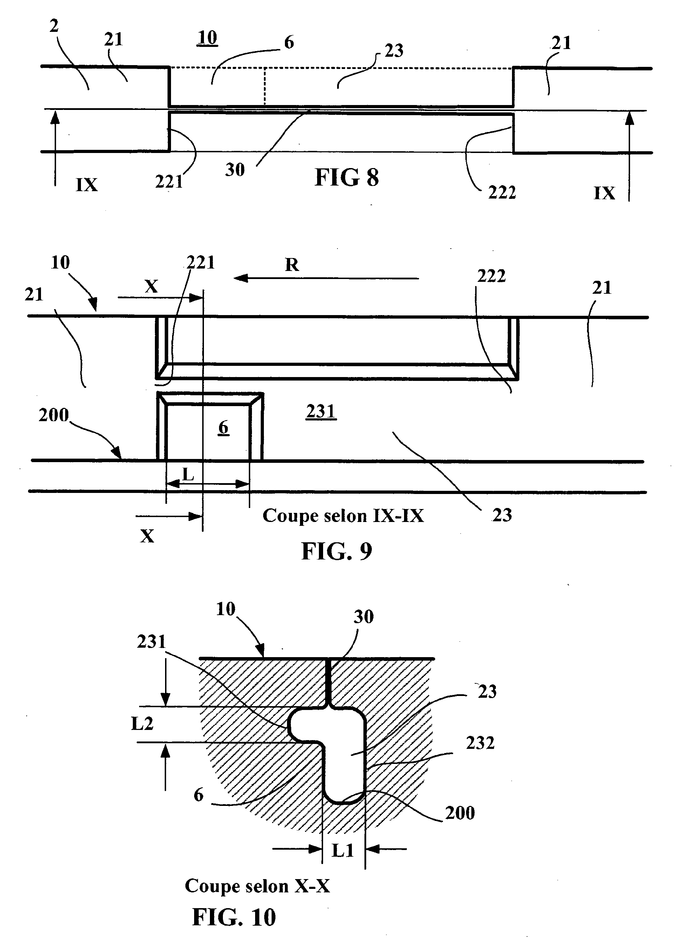

Cette variante est illustrée avec les figures 8 à 10 qui montrent une partie d'une bande de roulement de pneu pour véhicule poids lourd, cette bande comprenant au moins une rainure s'ouvrant, à l'état neuf, de façon discontinue sur la surface de roulement de la bande, c'est-à-dire en formant en alternance des cavités ouvertes sur ladite surface et des parties de canal sous jacente à ladite surface. En outre, la variante décrite correspond à un pneu ayant un sens préférentiel de roulage, ce sens étant matérialisé sur le pneu par un indicateur visible de l'utilisateur ; cet indicateur peut être, de façon connue, une flèche.

Sur la figure 8, on distingue une partie d'une surface de roulement 10 d'une bande de roulement et une rainure 2 s'ouvrant sur cette surface de roulement. On voit de cette rainure 2 deux cavités 21 ouvertes sur la surface de roulement 10, ces deux cavités étant reliées entre elles par un canal 23 sous jacent à ladite surface. Ce canal est prolongé jusqu'à la surface de roulement par une incision 30 dont la largeur est appropriée à la fois pour permettre le moulage et le démoulage d'un tel canal et pour se fermer lors du passage dans le contact avec une chaussée pendant le roulage. Après usure partielle de cette bande, chaque canal 23 s'ouvre sur la surface de roulement et forme alors de nouvelles arêtes. Sur cette figure 8, on voit qu'une entrée 221 du canal 23 est pourvue avec une protubérance 6 formant un dispositif de fermeture, l'autre entrée 222 étant dépourvue de dispositif de fermeture.

Comme on peut le voir sur la figure 9, montrant une coupe selon un plan de coupe dont la trace est repérée par la ligne IX-IX sur la figure 8, le sens de roulage préférentiel du pneu est indiqué par la flèche R. On voit sur cette figure 9 les deux cavités 21 reliées entre elles par le canal 23 situé sous la surface de roulement à une distance correspondant sensiblement à la moitié de la profondeur des cavités 21. Ce canal 23 comporte des parois latérales 231, 232 reliées par un fond 200 et est pourvu sur une de ses parois latérales 231 avec une protubérance 6 moulée sur cette paroi latérale et sur le fond 200 du canal.

Cette protubérance 6 est entièrement située à l'intérieur du canal 23 et elle a une longueur L, mesurée dans la direction principale du canal (parallèle à la direction R), qui est suffisante pour ne pas fléchir sous l'effet de la pression de liquide circulant dans la rainure par temps de pluie et qui est limitée afin de conserver un volume de canal approprié. En pratique, cette protubérance 6 à une longueur L au moins égale à trois millimètres pour des pneus destinés à des véhicules poids lourd. En outre, il est prévu un espace d'ouverture s'étendant à la fois latéralement à cette protubérance (c'est-à-dire entre la protubérance et la paroi opposée) de largeur L1 et au dessus de cette protubérance 6 (c'est-à-dire entre la protubérance et la partie de la bande se trouvant du côté de la surface de roulement 10 à l'état neuf). Ce dernier espace de largeur L2 est particulièrement utile pour faciliter le démoulage de cette variante de rainure dans une bande de roulement. Cette largeur L2 peut être faible voire nulle : ce qui est nécessaire c'est qu'il n'y ait pas de liaison mécanique entre la protubérance 6 et la partie de la bande de roulement comprise entre la surface de roulement et ladite protubérance.

Dans la variante décrite ici, la largeur L1 est égale à la largeur L2, ce qui présente l'avantage de limiter, pour une surface d'ouverture donnée, la dimension maximale des corps étrangers pouvant circuler dans la rainure et plus particulièrement dans chaque canal.

Sur la figure 10, montrant la même partie de bande de roulement selon un plan de coupe dont la trace sur la figure 9 est repérée par la ligne X-X, on voit que l'espace prévu au dessus de la protubérance (c'est-à-dire entre la partie de la bande de roulement située entre la surface de roulement à l'état neuf et la protubérance) de largeur L2 est sensiblement égal à l'espace prévu latéralement entre la même protubérance 6 et la paroi latérale opposée 232 (cette paroi correspondant à la paroi du canal ne portant pas la protubérance).

Dans une variante non montrée ici, la protubérance peut être liée au fond du canal et aussi à la partie de la bande de roulement qui s'étend au dessus d'elle, c'est-à-dire à la partie située vers la surface de roulement à l'état neuf. Ce cas est toutefois moins favorable d'un point de vue démoulage comparé à la variante qui a été décrite avec le support des figures 8 à 10.

La variante qui a été décrite ici avec une seule protubérance à une entrée de chaque canal peut être déclinée de manière à ce que chaque dispositif de fermeture partielle soit formé de deux protubérances se faisant face et délimitant une ouverture entre elles.

On peut également pourvoir chaque entrée de chaque canal avec tel un dispositif de fermeture partielle, notamment dès lors que le pneu n'a pas de sens de roulage préférentiel prédéfini.

L'invention n'est pas limitée aux exemples décrits et représentés et diverses modifications peuvent y être apportées sans sortir de son cadre tel que défini par les revendications ci-jointes.

## Revendications

1. Pneu pour véhicule poids lourd comportant une bande de roulement (1) ayant une surface de roulement (10) destinée à venir en contact avec une chaussée, cette bande étant pourvue à l'état neuf avec au moins une rainure délimitée par des parois latérales (20, 20') se faisant face, ces parois latérales étant reliées entre elles par un fond de rainure (200), cette rainure (2) comprenant, à l'état neuf, une pluralité de portions ouvertes (21) vers l'extérieur de la bande et de portions formant des canaux (22) sous-jacents à la surface de roulement, chaque portion ouverte (21) ayant deux extrémités (211, 212) et se prolongeant de part et d'autre de ses extrémités sous la surface de roulement par ces canaux (22) ayant des entrées (221, 222) reliées respectivement aux extrémités (211, 212) des portions ouvertes (21), ces entrées (221, 222) de chaque canal ayant une surface moyenne S, cette bande de roulement étant **caractérisée en ce qu'**au moins une entrée de chaque canal est pourvue avec un dispositif de fermeture (4) partielle pour fermer en partie la section des entrées (221, 222) des canaux lors du roulage du pneu et réserver un passage non fermé, ce dispositif de fermeture (4) comprenant au moins une protubérance (41) formée sur au moins une paroi délimitant la rainure (2), ce dispositif de fermeture (4) étant prévu pour fermer au moins 40% de la surface de section S des entrées (221, 222) des canaux et au plus 70% de cette surface S.

2. Pneu selon la revendication 1 **caractérisé en ce que** le dispositif de fermeture (4) est formé de manière à créer un passage (5) entre le dispositif de fermeture et le fond de la rainure (2), ce passage (5) ayant une section dont la surface est au moins égale à 30% de la surface de section S des entrées (221, 222) des canaux.

3. Pneu selon l'une des revendications 1 ou 2 **caractérisé en ce que** le dispositif de fermeture (4) d'au moins une rainure (2) comprend deux protubérances (41, 42) séparées l'une de l'autre dans la direction de la largeur de la rainure par une distance minimale D, chaque protubérance étant portée par une paroi de la rainure et séparée de la paroi opposée de cette rainure par une distance minimale A, ce dispositif de fermeture (4) étant en outre **caractérisé en ce que** la distance minimale D entre deux protubérances (41, 42) est inférieure à la distance minimale A.

4. Pneu selon la revendication 3 **caractérisé en ce que** le dispositif de fermeture (4) comprend deux protubérances (41, 42) de forme semi hémisphérique.

5. Pneu selon les revendications 1 à 4 **caractérisé en ce que** le pneu comporte un sens préférentiel de roulage matérialisé par un indicateur visible présent sur le pneu, chaque dispositif de fermeture étant formé sur une seule entrée de chaque canal, cette entrée correspondant à la partie de chaque canal rentrant la première dans le contact lorsque le pneu roule sur une chaussée.

6. Pneu selon la revendication 1 **caractérisé en ce que** le dispositif de fermeture (4) d'au moins une entrée de chaque canal (23) est formé avec au moins une protubérance (6), chaque protubérance (6) étant en totalité moulée sur une paroi du canal (231), cette protubérance étant formée pour être reliée au fond (200) dudit canal, une ouverture étant ménagée pour être située latéralement à chaque protubérance et au dessus de chaque protubérance.

7. Pneu selon la revendication 6 **caractérisé en ce que** la partie latérale de l'ouverture ménagée par le dispositif de fermeture de chaque canal est de largeur L1, cette largeur L1 étant égale ou sensiblement égale à la largeur L2 de la partie de la même ouverture située au dessus de chaque protubérance du dispositif de fermeture.

8. Pneu selon la revendication 6 **caractérisé en ce que** la largeur L1 est proche de ou égale à zéro.

9. Pneu selon les revendications 6 à 8 **caractérisé en ce que** le pneu comporte un sens préférentiel de roulage (R) matérialisé par un indicateur visible présent sur le pneu, chaque dispositif de fermeture étant formé sur une seule entrée de chaque canal, cette entrée (221) correspondant à la partie de chaque canal rentrant la première dans le contact lorsque le pneu roule sur une chaussée.

## Patentansprüche

1. Reifen für Schwerlastwagen, der einen Laufstreifen (1) mit einer Lauffläche (10) aufweist, die dazu bestimmt ist, mit einer Fahrbahn in Kontakt zu kommen, wobei dieser Streifen im Neuzustand mit mindestens einer Rille versehen ist, die von einander gegenüberliegenden Seitenwänden (20, 20') begrenzt wird, wobei diese Seitenwände miteinander über einen Rillengrund (200) verbunden sind, wobei diese Rille (2) im Neuzustand eine Vielzahl von zur Außenseite des Streifens offenen Abschnitten (21) und von unter der Lauffläche liegende Kanäle (22) bildenden Abschnitten enthält, wobei jeder offene Abschnitt (21) zwei Enden (211, 212) hat und sich zu beiden Seiten seiner Enden unter der Lauffläche durch diese Kanäle (22) verlängert, die Eingänge (221, 222) haben, welche jeweils mit den Enden (211, 212) der offenen Abschnitte (21) verbunden sind, wobei diese Eingänge (221, 222) jedes Kanals eine mittlere Fläche S haben, wobei dieser Laufstreifen **dadurch gekennzeichnet ist, dass** mindestens ein Eingang jedes Kanals mit einer Vorrichtung (4) zum teilweisen Schließen versehen ist, um den Querschnitt der Eingänge (221, 222) der Kanäle beim Rollen des Reifens teilweise zu schließen und einen nicht geschlossenen Durchlass auszusparen, wobei diese Schließvorrichtung (4) mindestens einen Vorsprung (41) enthält, der auf mindestens einer die Rille (2) begrenzenden Wand ausgebildet ist, wobei diese Schließvorrichtung (4) vorgesehen ist, um mindestens 40% der Querschnittsfläche S der Eingänge (221, 222) der Kanäle und höchstens 70% dieser Fläche S zu schließen.

2. Reifen nach Anspruch 1, **dadurch gekennzeichnet, dass** die Schließvorrichtung (4) so ausgebildet ist, dass ein Durchlass (5) zwischen der Schließvorrichtung und dem Grund der Rille (2) erzeugt wird, wobei dieser Durchlass (5) einen Querschnitt hat, dessen Fläche mindestens gleich 30% der Querschnittsfläche S der Eingänge (221, 222) der Kanäle ist.

3. Reifen nach einem der Ansprüche 1 oder 2, **dadurch gekennzeichnet, dass** die Schließvorrichtung (4) mindestens einer Rille (2) zwei Vorsprünge (41, 42) enthält, die in Richtung der Breite der Rille durch einen Mindestabstand D getrennt sind, wobei jeder Vorsprung von einer Wand der Rille getragen wird und von der gegenüberliegenden Wand dieser Rille um einen Mindestabstand A getrennt ist, wobei diese Schließvorrichtung (4) außerdem **dadurch gekennzeichnet ist, dass** der Mindestabstand D zwischen zwei Vorsprüngen (41, 42) geringer als der Mindestabstand A ist.

4. Reifen nach Anspruch 3, **dadurch gekennzeichnet, dass** die Schließvorrichtung (4) zwei halbkugelförmige Vorsprünge (41, 42) enthält.

5. Reifen nach den Ansprüchen 1 bis 4, **dadurch gekennzeichnet, dass** der Reifen eine bevorzugte Rollrichtung aufweist, die von einer auf dem Reifen vorhandenen, sichtbaren Anzeige realisiert wird, wobei jede Schließvorrichtung an einem einzigen Eingang jedes Kanals ausgebildet ist, wobei dieser Eingang dem Teil jedes Kanals entspricht, der zuerst in Kontakt kommt, wenn der Reifen auf einer Fahrbahn rollt.

6. Reifen nach Anspruch 1, **dadurch gekennzeichnet, dass** die Schließvorrichtung (4) mindestens eines Eingangs jedes Kanals (23) mit mindestens einem Vorsprung (6) ausgebildet wird, wobei jeder Vorsprung (6) vollständig auf einer Wand des Kanals (231) geformt ist, wobei dieser Vorsprung ausgebildet ist, um mit dem Grund (200) des Kanals verbunden zu sein, wobei eine Öffnung so freigelassen wird, dass sie sich seitlich jedes Vorsprungs und über jedem Vorsprung zu befindet.

7. Reifen nach Anspruch 6, **dadurch gekennzeichnet, dass** der seitliche Teil der von der Schließvorrichtung jedes Kanals freigelassenen Öffnung die Breite L1 hat, wobei diese Breite L1 gleich oder im Wesentlichen gleich der Breite L2 des Teils der gleichen Öffnung ist, der sich über jedem Vorsprung der Schließvorrichtung befindet.

8. Reifen nach Anspruch 6, **dadurch gekennzeichnet, dass** die Breite L1 nahe oder gleich Null ist.

9. Reifen nach den Ansprüchen 6 bis 8, **dadurch gekennzeichnet, dass** der Reifen eine bevorzugte Rollrichtung (R) aufweist, die durch eine auf dem Reifen vorhandene sichtbare Anzeige realisiert wird, wobei jede Schließvorrichtung an einem einzigen Eingang jedes Kanals ausgebildet ist, wobei dieser Eingang (221) dem Teil jedes Kanals entspricht, der zuerst in Kontakt kommt, wenn der Reifen auf einer Fahrbahn rollt.

## Claims

1. Tyre for a heavy goods vehicle, having a tread (1) having a tread surface (10) intended to come into contact with a road surface, this tread being provided in the new state with at least one groove delimited by opposing side walls (20, 20'), these side walls being connected together by a groove bottom (200), this groove (2) comprising, in the new state, a plurality of portions (21) that are open towards the exterior of the tread and portions that form channels (22) underlying the tread surface, each open portion (21) having two ends (211, 212) and being extended on either side of the ends thereof under the tread surface by these channels (22) having inlets (221, 222) that are connected respectively to the ends (211, 212) of the open portions (21), these inlets (221, 222) to each channel having a mean surface area S, this tread being **characterized in that** at least one inlet to each channel is provided with a partial closure device (4) for partially closing the cross section of the inlets (221, 222) to the channels while the tyre is running and for leaving a passage unclosed, this closure device (4) comprising at least one protuberance (41) formed on at least one wall delimiting the groove (2), this closure device (4) being provided to close at least 40% of the cross-sectional surface area S of the inlets (221, 222) to the channels and at most 70% of this surface area S.

2. Tyre according to Claim 1, **characterized in that** the closure device (4) is formed so as to create a passage (5) between the closure device and the bottom of the groove (2), this passage (5) having a cross section of which the surface area is at least equal to 30% of the cross-sectional surface area S of the inlets (221, 222) to the channels.

3. Tyre according to either of Claims 1 and 2, **characterized in that** the closure device (4) of at least one groove (2) comprises two protuberances (41, 42) which are separated from one another in the direction of the width of the groove by a minimum distance D, each protuberance being supported by a wall of the groove and separated from the opposite wall of this groove by a minimum distance A, this closure device (4) being further **characterized in that** the minimum distance D between two protuberances (41, 42) is less than the minimum distance A.

4. Tyre according to Claim 3, **characterized in that** the closure device (4) comprises two protuberances (41, 42) having a semi-hemispherical shape.

5. Tyre according to Claims 1 to 4, **characterized in that** the tyre has a preferred running direction that is indicated by a visible indicator present on the tyre, each closure device being formed on a single inlet to each channel, this inlet corresponding to that part of each channel that makes first contact when the tyre is running on a road surface.

6. Tyre according to Claim 1, **characterized in that** the closure device (4) of at least one inlet to each channel (23) is formed with at least one protuberance (6), each protuberance (6) being entirely moulded on one wall of the channel (231), this protuberance being formed so as to be connected to the bottom (200) of said channel, an opening being formed so as to be located to the side of each protuberance and above each protuberance.

7. Tyre according to Claim 6, **characterized in that** the lateral part of the opening formed by the closure device of each channel has a width L1, this width L1 being equal to or substantially equal to the width L2 of that part of the same opening that is located above each protuberance on the closure device.

8. Tyre according to Claim 6, **characterized in that** the width L1 is close to or equal to zero.

9. Tyre according to Claims 6 to 8, **characterized in that** the tyre has a preferred running direction (R) that is indicated by a visible indicator present on the tyre, each closure device being formed on a single inlet to each channel, this inlet (221) corresponding to that part of each channel that makes first contact when the tyre is running on a road surface.
